# EUROPÄISCHE PATENTSCHRIFT

(11) **EP 0 917 995 B1**
(45) Veröffentlichungstag und Bekanntmachung des Hinweises auf die Patenterteilung: **10.04.2002**
(21) Anmeldenummer: 98121565.0
(22) Anmeldetag: 18.11.1998
(51) Int. Cl.: B60R 21/16

(54) **Regelbarer Auslassquerschnitt an einem Gassack**
Airbag with adjustable vent cross section
Ouverture de dégonflage à section transversale réglable

(30) Priorität: 19.11.1997 DE 29720462 U
(43) Veröffentlichungstag der Anmeldung: 26.05.1999
(73) Patentinhaber: TRW Automotive Safety Systems GmbH & Co. KG, 63743 Aschaffenburg (DE)
(72) Erfinder: Braunschädel, Axel, 63773 Goldbach (DE)
(74) Vertreter: Degwert, Hartmut, Dipl.-Phys.

(56) Entgegenhaltungen:
- DE-A- 2 116 347
- DE-A- 19 630 855
- US-A- 4 111 458
- PATENT ABSTRACTS OF JAPAN vol. 097, no. 001, 31. Januar 1997 & JP 08 244555 A (NISSAN MOTOR CO LTD), 24. September 1996
- PATENT ABSTRACTS OF JAPAN vol. 097, no. 002, 28. Februar 1997 & JP 08 268214 A (TAKATA KK), 15. Oktober 1996

## Beschreibung

Die Erfindung betrifft eine Aufprall-Schutzvorrichtung für Insassen von Kraftfahrzeugen oder dergl. mit einem zusammenlegbaren Gassack und einem Gasgenerator zum explosionsartigen Aufblasen des Gassacks bei Zündung einer im Gasgenerator angeordneten Treibladung, wobei das Gas beim Eintauchen eines Kraftfahrzeuginsassen in den aufgeblasenen Gassack über einen Auslaß aus dem Gassack entweichen kann. Solche Einrichtungen sind schon bekannt aus den Patentschriften DE 21 16 347A oder zum Beispiel aus der gattungsbildenden DE 196 30 855A.

Derartige Aufprall-Schutzvorrichtungen sind unter der Kurzbezeichnung Airbag seit vielen Jahren bekannt und nahezu alle modernen Kraftfahrzeuge sind damit serienmäßig ausgerüstet. Inzwischen werden nicht nur die im Lenkrad untergebrachten Airbags für den Fahrzeuglenker, sondern auch Beifahrer-Airbags, Seiten-Airbags, Kopf-Airbags u.s.w. serienmäßig oder zumindest wahlweise angeboten. Zweck all dieser Aufprall-Schutzvorrichtungen ist es, Verletzungen der Fahrzeuginsassen in Folge zu hoher Beschleunigungen zu vermeiden, d.h. die bei einem Unfall auftretenden Relativbewegungen zwischen dem Körper bzw. Körperteilen der Insassen und den benachbarten bzw. gegenüberliegenden Karosserieteilen soweit abzubremsen, daß die Aufprallenergie möglichst unterhalb solcher Größen bleibt, bei denen schwere Verletzungen verursacht werden.

Dazu wird mittels geeigneter Beschleunigungssensoren ein Signal ausgelöst, das ein schlagartiges Aufblasen des Airbags bewirkt, um in kürzester Zeit zwischen Insassen und Karosserieteilen ein Kissen zu installieren, in das der Fahrzeuginsasse eintauchen kann und durch das er auf unschädliche Relativgeschwindigkeiten zur Karosserie abgebremst werden kann. Dazu muß das Kissen oder Gaspolster nachgiebig ausgebildet werden, d.h. es muß zwar schlagartig seine volle Größe erreichen, es darf aber nicht hart bzw. voll elastisch bleiben und es darf den eintauchenden Körper nicht zurückwerfen. Es muß vielmehr ein eher plastisches Stoßverhalten aufweisen und unter dem Einfluß der aufprallenden Masse zusammendrückbar sein.

Dazu muß die Gasfüllung aus dem Airbag entweichen können. Dies wird vielfach dadurch erreicht, daß der Gassack aus einem Gewebe besteht, das vollflächig eine gewisse Gasdurchlässigkeit aufweist, die sich beim schlagartigen Aufblasen nicht negativ auswirkt, beim Eintauchen des Körpers aber zu einer zumindest teilweisen Entleerung des Gassacks führt, wodurch letzteres das angestrebte plastische Stoßverhalten annimmt.

Das Aufblas- und Auslaßverhalten von Airbags wird mit sogenannten "Dummys" in Aufprallversuchen getestet. Dabei werden dem menschlichen Körper nachgebildete Puppen in einer Fahrzeugkarosserie angeordnet, angeschnallt und mit einer definierten Geschwindigkeit gegen ein feststehendes Hindernis gefahren. Mittels einer Vielzahl von Beschleunigungssensoren wird dabei der Bewegungsablauf verschiedener Körperteile ermittelt und zusammen mit den Geschwindigkeits- und Beschleunigungsparametern der Karosserie ausgewertet, um Parameter für die Auslegung der Aufprall-Schutzvorrichtungen angeben zu können. Nicht zuletzt wird auf diese Weise auch das Ausströmverhalten von Airbags festgelegt.

Dabei ergibt sich das Problem, daß die bei einem Unfall in einen Airbag einfallende Körpermasse in weiten Grenzen schwanken kann. Mit 50 und 100 kg ist nur grob der Gewichtsbereich von Fahrzeuginsassen umschrieben. Es dürfte einleuchten, daß ein großer, kräftiger Mann vom Airbag anders "gebremst" werden muß, als eine kleine, schlanke Frau. Dementsprechend werden die Aufprallversuche auch mit unterschiedlich schweren Dummys durchgeführt, für die man eine Prozentklassifizierung entwickelt hat. Man spricht von einem 5%-Dummy, wenn man eine kleine Aufprallmasse simulieren will und von einem 95%-Dummy, wenn man eine große Aufprallmasse simulieren will.

Für die Auslegung der Airbags ergibt sich daraus das Problem, daß man nicht vorhersagen kann, ob bei einem Unfall eine kleine Frau oder ein großer Mann in den schlagartig aufgeblasenen Gassack fallen wird. Hinsichtlich der Auslegung des Aufblasvolumens muß man an die obere Grenze gehen, hinsichtlich des Auslaßverhaltens kann man das nicht, weil der Airbag für die kleine Frau dazu zu "hart" wäre und seinerseits Verletzungen verursachen könnte.

Es besteht somit die Aufgabe, das Auslaßverhalten von Aufprall-Schutzvorrichtungen der eingangs genannten Art so zu beeinflussen, daß ein hinsichtlich Aufblasvolumen und Aufblasgeschwindigkeit unveränderlicher Gassack ein an die eintauchende Körpermasse angepaßtes Auslaßverhalten aufweist, so daß mit demselben Airbag alle möglichen Fahrzeuginsassen optimal geschützt werden können.

Zur Lösung dieser Aufgabe wird erfindungsgemäß vorgeschlagen, daß der Auslaß mit Gewebeschicht überspannt ist, die am Rand des Auslasses befestigt ist und sich unter dem Einfluß des hindurchströmenden Gases bzw. des Innendrucks im Gassack napfartig auswölben kann und dabei eine Verkleinerung des Auslaßquerschnittes bewirkt, die proportional zu dem durch das Eintauchen eines Fahrzeuginsassen in den Gassack erzeugten Innendruck ist.

Ein derartig ausgebildeter Gassack hat den Vorteil, daß er sich hinsichtlich des Auslaßverhaltens selbsttätig auf die eintauchende Körpermasse einstellt, wobei der Auslaßquerschnitt so gesteuert wird, daß das Gas beim Eintauchen eines leichten Körpers schneller entweichen kann, als beim Eintauchen eines schweren Körpers. Dieser Vorteil wird auf sehr einfache Weise erreicht, denn zur Steuerung des Auslaßquerschnitts ist kein gesonderter Regelkreis mit Sensoren zur Ermittlung des Körpergewichts erfoderlich, weil die erfindungsgemäß angeordneten Bauteile ohne weiteres eine wirksame, selbsttätige Regelung des Auslaßquerschnitts bewirken können.

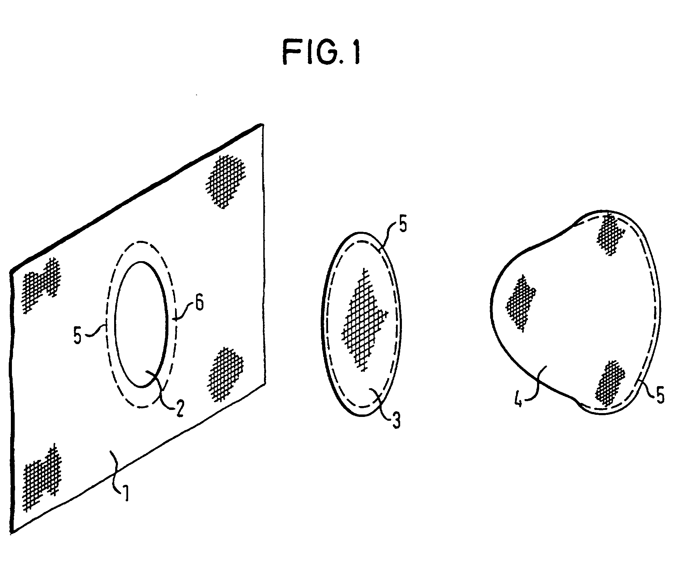

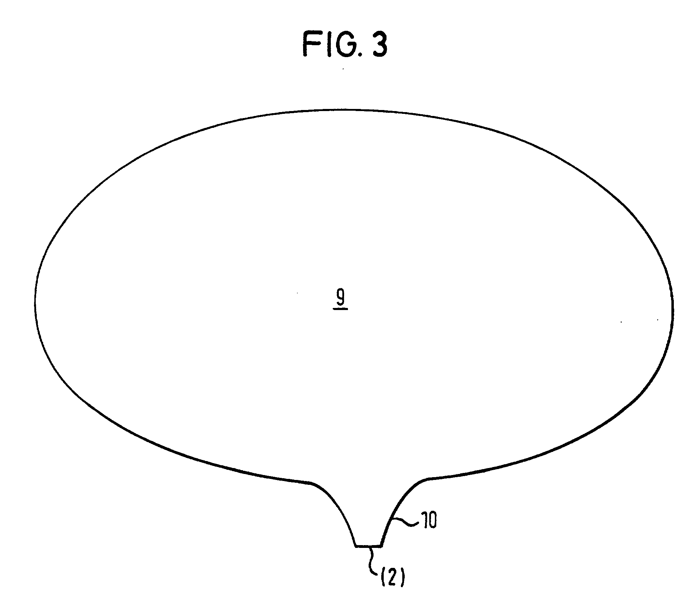

Vorteilhafte und zweckmäßige Ausgestaltungen des Erfindungsgedankens sind in den Unteransprüchen 2 bis 12 beschrieben. Weitere Einzelheiten werden anhand der in den Figuren 1 und 3 dargestellten Ausführungsbeispiele näher erläutert. Es zeigen:
Fig. 1 einen Gassackausschnitt mit den erfindungsgemäßen Gewebeschichten in einer Explosionsdarstellung.
Fig. 2 einen Gassackausschnitt gemäß einer zweiten Ausführungsform der Erfindung.
Fig. 3 einen zweckmäßig gestalteten Gewebeabschnitt.

Bei dem in Fig. 1 dargestellten Ausschnitt eines Gassacks 1 ist ein Auslaß 2 vorgesehen, der mit einer zweiten Gewebeschicht 3 und einer ersten Gewebeschicht 4 überspannt ist, wenn die Gewebeschichten 3 und 4 längs der Umfangslinie 5 mit dem Rand 6 des Auslasses 2 verbunden sind. Dabei besteht die Gewebeschicht 3 erfindungsgemäß aus einem gut gasdurchlässig, unelastischen Gewebe, während die Gewebeschicht 4 nur mäßig gasdurchlässig ist und aus einem elastischen Material besteht oder aber derart dimensioniert ist, daß sich eine napfartige Auswölbung auch ohne elastische Dehnung des Materials ausbilden kann.

Unter dem Einfluß des ausströmenden Gases bzw. dem durch das Einfallen eines Fahrzeuginsassen erzeugten Innendruck wirken die beiden Gewebeschichten derart zusammen, daß sich die erste Gewebeschicht 4 wegen des größeren Gasdurchgangswiderstandes, wie dargestellt, napfartig oder glockenförmig auswölbt, wobei die zweite Gewebeschicht 3 mitgenommen wird. Da diese Schicht aus unelastischem Material besteht, führt ihre Auswölbung zwangsläufig zu einer Verkleinerung des Auslaßquerschnittes, denn eine Auswölbung des unelastischen Materials in Gasströmungsrichtung ist nur möglich, wenn gleichzeitig der Rand 6 des Auslasses 2 quer zur Gasströmungsrichtung zusammengezogen wird, was gleichbedeutend mit einer Verkleinerung des Auslaßquerschnittes ist. Es versteht sich von selbst, daß die Verkleinerung des Auslaßquerschnittes selbstregelnd in dem Sinne ist, daß beim Einfallen eines schweren Körpers in den Gassack die zweite Gewebeschicht viel stärker ausgewölbt und damit der Rand 6 des Auslasses 2 stärker zusammengezogen wird, als wenn ein leichter Körper in den Gassack 1 einfällt.

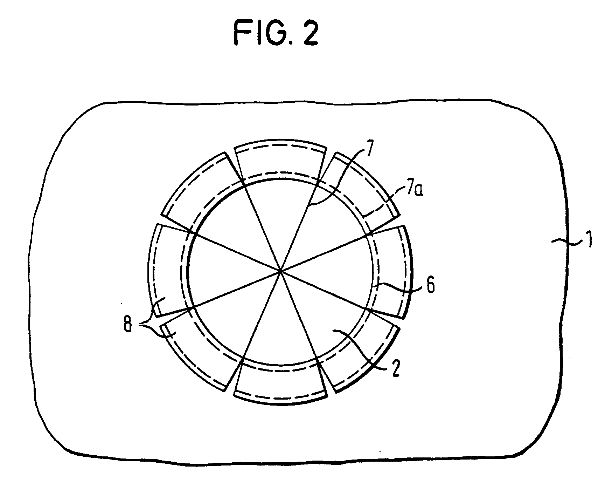

Bei der Ausführungsform gemäß Fig. 2 ist die unelastische Gewebeschicht 3 durch einen unelastischen Faden 7 ersetzt, der entweder aus mehreren endseitig am Rand 6 des Auslasses 2 befestigten Strängen oder aus einer endlosen Schlaufe bestehen kann, die mit randseitigen Bereichen 7a am Rand 6 des Auslasses 2 entweder befestigt oder - wie in Fig. 2 dargestellt - längsbeweglich in Saumabschnitten 8 des umgeklappten Materials des Gassacks 1 geführt sind. Auch hier bewirkt eine Auswölbung der unelastischen Fäden in Gasströmungsrichtung, daß der Rand 6 des Auslasses 2 zusammengezogen und damit der Auslaßquerschnitt verkleinert wird. Auch bei dieser Ausführungsform ist die Verkleinerung des Auslasses 2 selbstregelnd im oben erläuterten Sinne.

Fig. 3 zeigt einen Gewebeabschnitt 9, der zur Herstellung eines Gassacks randseitig mit einem zweiten, gleichgeschnittenen Gewebeabschnitt vernäht wird. Um das Zusammenziehen des Auslaßquerschnitts zu erleichtern, ist an den Gewebeabschnitten 9 ein flaschenhalsartiger Ansatz 10 vorgesehen, der bei aufgeblasenem Gassack einen Bereich bildet, in dem das Gewebe erheblich geringeren Spannungen ausgesetzt ist, als in den übrigen Bereichen. Das bedeutet, daß der Widerstand des vom Innendruck gespannten Gewebes gegen eine Verkleinerung des Auslaßquerschnilts viel kleiner ist und daß man daher mit kleineren "Stellkräften" zur Anpassung des Ausströmverhaltens an die eintauchende Körpermasse auskommt.

## Patentansprüche

1. Aufprall-Schutzvorrichtung für Insassen von Fahrzeugen oder dergl. mit einem zusammenlegbaren Gassack (1) und einem Gasgenerator zum explosionsartigen Aufblasen des Gassacks (1) bei Zündung einer im Gasgenerator angeordneten Treibladung, wobei das Gas beim Eintauchen eines Kraftfahrzeuginsassen in den aufgeblasenen Gassack (1) über einen Auslaß (2) aus dem Gassack (1) entweichen kann, **dadurch gekennzeichnet, daß** der Auslaß (2) mit einer Gewebeschicht (4) überspannt ist, die am Rand (6) des Auslasses (2) befestigt ist und sich unter dem Einfluß des hindurchströmenden Gases bzw. des Innendrucks im Gassack (1) napfartig auswölben kann und dabei eine Verkleinerung des Auslaßquerschnittes bewirkt, die um so größer ist, desto höher der durch das Eintauchen eines Fahrzeuginsassen in den Gassack (1) erzeugte Innendruck ist.

2. Vorrichtung nach Anspruch 1, **dadurch gekennzeichnet, daß** der Auslaß (2) mit einer ersten, elastischen, mäßig gasdurchlässigen Gewebeschicht (4) und einer zweiten, unelastischen, gut gasdurchlässigen Gewebeschicht (3) überspannt ist, wobei die zweite Gewebeschicht (3) in Gasströmungsrichtung gesehen außenseitig angeordnet und mit dem Rand (6) des Auslasses (2) verbunden ist.

3. Vorrichtung nach Anspruch 1 oder 2, **dadurch gekennzeichnet, daß** beide Gewebeschichten (3, 4) gemeinsam mit dem Rand (6) des Auslasses (2) verbunden sind.

4. Vorrichtung nach Anspruch 3, **dadurch gekennzeichnet, daß** die beiden Gewebeschichten (3, 4) mittels eines unelastischen Fadens längs einer Umfangslinie (5) mit dem Rand (6) des Auslasses (2) sowie miteinander verbunden sind.

5. Vorrichtung nach einem der Ansprüche 1 bis 4, **dadurch gekennzeichnet, daß** die erste, innen liegende Gewebeschicht (4) den Auslaß (2) nicht auf kürzestem Weg überdeckt, sondern dreidimensional vorgeformt ist, so daß sie auch ohne elastische Dehnung die Form einer sich durch den Auslaß (2) erstreckenden Glocke bzw. eines Kegels einnimmt, wenn der Gassack (1) aufgeblasen und durch einen einfallenden Fahrzeuginsassen belastet wird.

6. Vorrichtung nach einem der Ansprüche 1 bis 5, **dadurch gekennzeichnet, daß** die zweite Gewebeschicht (3) netzartig ausgebildet ist.

7. Vorrichtung nach einem der Ansprüche 1 bis 5, **dadurch gekennzeichnet, daß** die zweite Gewebeschicht (3) durch eine Mehrzahl über den Auslaß (2) gespannter, endseitig mit dem Rand (6) des Auslasses (2) verbundener, unelastischer Fäden ersetzt ist.

8. Vorrichtung nach einem der Ansprüche 1 bis 5, **dadurch gekennzeichnet, daß** die zweite Gewebeschicht (3) durch einen endlosen Faden (7) ersetzt ist, der den Auslaß (2) in einer Mehrzahl von Strängen überspannt und mit schlaufenartigen Bereichen (7a) am Rande des Auslasses (2) befestigt ist.

9. Vorrichtung nach Anspruch 8, jedoch mit der Maßgabe, daß die schlaufenartigen Bereiche (7a) längsbeweglich in Saumabschnitten (8) des umgeklappten Materials des Gassacks (1) geführt sind.

10. Vorrichtung nach einem der Ansprüche 1 bis 9, jedoch mit der Maßgabe, daß die unelastische Gewebeschicht (3) bzw. die Fäden (7) in Gasströmungsrichtung gesehen innenseitig angeordnet und im zentralen Bereich des Auslaßquerschnittes mit der ersten Gewebeschicht (4) verbunden ist bzw. sind.

11. Vorrichtung nach einem der Ansprüche 1 bis 10, **dadurch gekennzeichnet, daß** der Gassack (1) aus zwei Gewebeabschnitten besteht, die längs einer Meridiannaht miteinander verbunden sind.

12. Vorrichtung nach Anspruch 11, **dadurch gekennzeichnet, daß** der Gassack (1) aus zwei Gewebeabschnitten (9) mit flaschenhalsartigen Ansätzen (10) besteht, die randseitig unter Ausbildung eines Auslasses (2) am Ende der Ansätze (10) miteinander verbunden sind.

## Claims

1. An impact protection device for occupants of vehicles or the like comprising a foldable gas bag (1) and a gas generator for sudden inflation of the gas bag (1) upon ignition of a propellant charge arranged in the gas generator, the gas being able to escape from the gas bag (1) via a vent opening (2) when a vehicle occupant plunges into the inflated gas bag (1), **characterized in that** the vent opening (2) has a fabric layer (4) stretched over it which is fastened at the edge (6) of the vent opening (2) and is adapted to bulge out like a cup under the influence of the gas flowing through or of the internal pressure in the gas bag (1), causing a reduction of the cross-section of the vent opening, the reduction being the greater the higher the internal pressure produced by a vehicle occupant plunging into the gas bag (1).

2. The device according to claim 1, **characterized in that** the vent opening (2) has a first, elastic, moderately gas-permeable fabric layer (4) and a second, non-elastic, fairly gas-permeable fabric layer (3) stretched over it, the second fabric layer (3) being arranged on the outer side, as viewed in the gas flow direction, and being connected with the edge (6) of the vent opening (2).

3. The device according to claim 1 or 2, **characterized in that** the two fabric layers (3, 4) are connected jointly with the edge (6) of the vent opening (2).

4. The device according to claim 3, **characterized in that** the two fabric layers (3, 4) are connected with the edge (6) of the vent opening (2) along a peripheral line (5) by means of a non-elastic thread and also are connected with each other.

5. The device according to any of claims 1 to 4, **characterized in that** the first, inside fabric layer (4) does not cover the vent opening (2) over the shortest path, but rather is preformed three-dimensionally so that it assumes the shape of a bell or a cone extending through the vent opening (2) even without elastic stretching when the gas bag (1) is inflated and is stressed by a vehicle occupant plunging in.

6. The device according to any of claims 1 to 5, **characterized in that** the second fabric layer (3) is configured like a net.

7. The device according to any of claims 1 to 5, **characterized in that** a plurality of non-elastic threads stretched over the vent opening (2) and connected at their ends with the edge (6) of the vent opening (2) is substituted for the second fabric layer (3).

8. The device according to any of claims 1 to 5, **characterized in that** an endless thread (7) stretched over the vent opening (2) in a plurality of strands and having loop-type areas (7a) by which it is fastened to the edge of the vent opening (2) is substituted for the second fabric layer (3).

9. The device according to claim 8, but with the proviso that the loop-type areas (7a) are guided so as to be movable longitudinally within seam sections (8) of the folded-over material of the gas bag (1).

10. The device according to any of claims 1 to 9, but with the proviso that the non-elastic fabric layer (3) or the threads (7) is/are arranged on the inside, as viewed in the gas flow direction, and is/are connected with the first fabric layer (4) in the central portion of the cross-section of the vent opening.

11. The device according to any of claims 1 to 10, **characterized in that** the gas bag (1) consists of two fabric sections which are connected with each other along a meridian seam.

12. The device according to claim 11, **characterized in that** the gas bag (1) consists of two fabric sections (9) with bottleneck-like extensions (10) which are connected with each other at their edges to form a vent opening (2) at the end of the extensions (10).

## Revendications

1. Dispositif de protection contre les impacts latéraux pour des passagers de véhicules ou similaires, comportant un coussin à gaz (1) repliable et un générateur de gaz pour gonfler de manière explosive le coussin à gaz (1) lors de l'allumage d'une charge propulsive agencée dans le générateur de gaz, le gaz étant capable de s'échapper hors du coussin à gaz (1) via une sortie (2) lorsqu'un passager plonge dans le coussin à gaz (1) gonflé, **caractérisé en ce que** la sortie (2) est recouverte par une couche de tissu (4) qui est fixée au bord (6) de la sortie (2) et qui peut se bomber à la manière d'une coupe sous l'influence du gaz qui s'écoule ou de la pression interne qui règne dans le coussin à gaz (1), respectivement, en provoquant une réduction de la section transversale de sortie qui est d'autant plus grande, que la pression interne engendrée par le plongement du passager dans le coussin à gaz (1) est forte.

2. Dispositif selon la revendication 1, **caractérisé en ce que** la sortie (2) est recouverte par une première couche de tissu (4) élastique et modérément perméable au gaz et par une deuxième couche de tissu (3) non élastique et bien perméable au gaz, la deuxième couche de tissu (3), vue en direction d'écoulement du gaz, étant agencée sur le côté extérieur et reliée avec le bord (6) de la sortie (2).

3. Dispositif selon la revendication 1 ou 2, **caractérisé en ce que** les deux couches de tissu (3, 4) sont ensemble reliées avec le bord (6) de la sortie (2).

4. Dispositif selon la revendication 3, **caractérisé en ce que** les deux couches de tissu (3, 4) sont reliées au moyen d'un fil non élastique le long d'une ligne périphérique (5), avec le bord (6) de la sortie (2) ainsi que l'une avec l'autre.

5. Dispositif selon l'une quelconque des revendications 1 à 4, **caractérisé en ce que** la première couche de tissu (4) située à l'intérieur ne recouvre pas la sortie (2) par la voie la plus courte, mais elle est préformée en trois dimensions de sorte que sans extension élastique, elle prend aussi la forme d'une cloche ou d'un cône s'étendant à travers la sortie (2) lorsque le coussin à gaz (1) est gonflé et sollicité par un passager qui tombe sur celui-ci.

6. Dispositif selon l'une quelconque des revendications 1 à 5, **caractérisé en ce que** la deuxième couche de tissu (3) est réalisée à la manière d'un filet.

7. Dispositif selon l'une quelconque des revendications 1 à 5, **caractérisé en ce que** la deuxième couche de tissu (3) est remplacée par une multitude de fils non élastiques tendus au-dessus de la sortie (2) et reliés à leurs extrémités avec le bord (6) de la sortie (2).

8. Dispositif selon l'une quelconque des revendications 1 à 5, **caractérisé en ce que** la deuxième couche de tissu (3) est remplacée par un fil (7) sans fin qui recouvre la sortie (2) en une multitude d'écheveaux et qui est fixé par des zones (7a) en forme de boucles au bord de la sortie (2).

9. Dispositif selon la revendication 8, sous réserve toutefois que les zones (7a) en forme de boucles soient guidées avec déplacement transversal dans des portions d'ourlet (8) du matériau rabattu du coussin à gaz (1).

10. Dispositif selon l'une quelconque des revendications 1 à 9, sous réserve toutefois que la couche de tissu (3) non élastique ou les fils (7), respectivement, soit/soient agencé(s) sur le côté intérieur, vu en direction d'écoulement du gaz, et relié(s) à la première couche de tissu (4) dans la zone centrale de la section transversale de sortie.

11. Dispositif selon l'une quelconque des revendications 1 à 10, **caractérisé en ce que** le coussin à gaz (1) est constitué de deux portions de tissu qui sont reliées l'une à l'autre le long d'une couture méridienne.

12. Dispositif selon la revendication 11, **caractérisé en ce que** le coussin à gaz (1) est constitué de deux portions de tissus (9) avec des prolongements (10) en forme de goulot de bouteille qui sont reliées l'une à l'autre sur le bord en formant une sortie (2) à l'extrémité des prolongements (10).
